# EUROPÄISCHE PATENTSCHRIFT

(11) **EP 2 316 900 B1**
(45) Veröffentlichungstag und Bekanntmachung des Hinweises auf die Patenterteilung: **23.01.2019**
(21) Anmeldenummer: 10188260.3
(22) Anmeldetag: 20.10.2010
(51) Int. Cl.: C09J 123/02, C09J 123/08, C09J 151/00

(54) **Verwendung einer Mischung aus einem vernetzbaren Polyolefin und einem Klebharz als Haftklebstoff**
Use of a mixture of crosslinkable polyolefin and adhesive bonding resin as pressure sensitive adhesive
Utilisation d'une composition à base d'une polyoléfine réticulable et une resine adhésive comme adhésif sensible à la pression

(30) Priorität: 03.11.2009 DE 102009046362
(43) Veröffentlichungstag der Anmeldung: 04.05.2011
(73) Patentinhaber: tesa SE, 22848 Norderstedt (DE)
(72) Erfinder: Müssig, Bernhard, 21218 Seevetal (DE); Metzler, Kerstin, 1225 Chène-Bourg Chène-Bourg (CH)

(56) Entgegenhaltungen:
- EP-A1- 0 664 327
- EP-A2- 0 301 867
- WO-A1-97/07976
- DE-A1- 10 358 264
- US-A- 4 105 718
- US-A- 4 602 056
- US-A- 4 977 206
- US-A- 5 278 227
- US-A1- 2006 154 097
- Hermann Onusseit: "Haftklebstoffe", Römpp Online, Version 3.9 , 1 January 2010 (2010-01-01), Retrieved from the Internet: URL:http://www.roempp.com/prod/roempp.php [retrieved on 2010-11-11]

## Beschreibung

Die Erfindung betrifft einen Haftklebstoff (Haftkleber, Haftklebemasse) umfassend ein vernetzbares Polyolefin und mindestens ein Klebharz, Verfahren der Applikation des Haftklebstoffs als Lösungsmittelmasse oder Heißschmelzkleber und die Verwendung in einem Klebeband.
Randomcopolymere mit hohem Comonomeranteil (auch Plastomere genannt) weisen eine geringe Kristallinität und geringen Schmelzpunkt von ca. 40 °C bis 60 °C auf oder sind amorph. Sie werden als Flexibilisierungsmittel oder Schlagzähadditive für harte Polyolefine verwendet. Sie werden nur in begrenztem Umfang für Schmelzklebstoffe eingesetzt, weil sie durch den niedrigen Schmelzpunkt nicht wärmebeständig sind.
Solche Plastomere werden als Coextrusionsschicht für leicht klebrige und leicht wiederablösbare Oberflächenschutzfolien vorgeschlagen. Diese weisen bei Raumtemperatur keine signifikante Klebkraft (das heißt unter 0,1 N/cm) auf, lassen sich jedoch oberhalb des Schmelzpunktes auf Platten aus Polycarbonat, Acrylglas oder ABS als Kratzschutz aufsiegeln und später bei Raumtemperatur wieder abziehen. Oberflächenschutzfolien aus Randomcopolymeren mit hohem Comonomeranteil sind nicht gut lagerfähig, weil bei leicht erhöhter Lagertemperatur die Rollen verblocken, das heißt, dass sie sich nicht wieder abrollen lassen, und sie weisen auch keine Wärmebeständigkeit beim Anwender auf.
Daher werden üblicherweise Randomcopolymere mit einem niedrigen Comonomeranteil und daher mit einem höheren Schmelzpunkt von über 60 °C eingesetzt, auch wenn dann eine höhere Siegeltemperatur notwendig ist. Sie sind bei Raumtemperatur nicht haftklebrig. Alternativ werden auch Folien mit einer Haftklebstoffbeschichtung aus Polyacrylat oder Synthesekautschuk verwendet.

Plastomere werden auch für bei Raumtemperatur (23 °C) klebrige Oberflächenschutzfolien vorgeschlagen. Durch den Zusatz einer kleinen Menge Weichmacher oder Tackifier (Klebharz) wird die Kristallinität so weit reduziert, dass auch bei Raumtemperatur eine gute Klebrigkeit zumindest auf glatten Kunststoff- oder polierten Stahlplatten erreicht wird. Solche Kleber weisen jedoch eine noch geringere Wärmebeständigkeit als Coextrusionsschichten mit einem weichen Randomcopolymer auf, sie werden daher nicht als Haftkleber für technische Klebebänder verwendet. Darüber hinaus hinterlassen sie nach Entfernung von solchen Platten einen dünnen aber sichtbaren Belag, der vom Fachmann Ghosting genannt wird. Sie haben sich aus diesen Gründen für die genannten Anwendungen nicht durchgesetzt.
Daher werden für haftklebrige Oberflächenschutzfolien üblicherweise Folien mit einer Klebstoffbeschichtung aus Polyacrylat oder Synthesekautschuk verwendet.

Werden Klebmassen aus einem Klebharz und einem Polyolefinhomopolymer wie LDPE (PE-LD) oder Polypropylenhomopolymer oder einem Copolymer mit geringem Comonomeranteil wie Random-Polypropylen für Siegelschichten oder LLDPE (PE-LLD) hergestellt, erweisen diese sich als nicht haftklebrig.

Klebebänder enthalten oder bestehen aus mindestens eine beziehungsweise einer Schicht (Haft)kleber, diese sind üblicherweise auf Basis Naturkautschuk, Synthesekautschuk (zum Beispiel Polyisobutylen, Styrolblockcopolymer, EVA, SBR) in Kombination mit einem Klebharz oder Polyacrylat und ganz selten aus sehr teurem Silikon. Die üblichen Haftkleber weisen die Eigenschaften hoher Klebkraft, Scherfestigkeit, lösungsmittelfreier Verarbeitbarkeit aus der Schmelze, hoher Wasserbeständigkeit (im Gegensatz zu Dispersionsbeschichtungen), günstiger Kosten oder hoher Wärmealterungs- und UV-Stabilität auf.

Klebebänder sollen Haftklebstoffe (Klebemassen) enthalten welche hohe Verklebungsfestigkeiten (Klebkräfte) und Scherfestigkeit (Widerstand gegen kalten Fluss) bei Raumtemperatur und meistens auch bei erhöhten Temperaturen aufweisen. Klebebänder werden daher üblicherweise mit Klebemassen auf Basis Naturkautschuk, Styrolblockcopolymer und Acrylat gefertigt. Die Naturkautschuk-Klebemassen sind lösungsmittelhaltig und weisen eine geringe Alterungs- und UV-Stabilität auf. Styrolblockcopolymer-Klebemassen, in der Regel basierend auf Styrol-Isopren-StyrolBlockcopolymeren, sind lösungsmittelfrei verarbeitbar, weisen aber ebenfalls eine geringe Alterungs- und UV-Stabilität auf. Klebemassen auf Basis hydrierter Styrolblockcopolymere sind sehr teuer, haben geringen Tack (Klebrigkeit) und Klebkraft und haften deshalb auf vielen Untergründen schlecht. Sie erweichen ebenfalls schon deutlich unter 100 °C. Acrylatklebemassen haben eine gute Alterungs- und UV-Stabilität, haften aber auf niederenergetischen unpolaren Polymeren wie zum Beispiel Polyethylen trotz aller bisherigen Bemühungen nur schlecht. Silikonhaftkleber haben eine gute Alterungs- und UV-Stabilität und eine gute Haftung speziell auf niederenergetischen Oberflächen, sind aber sind extrem teuer und lassen sich nicht mit den üblichen silikonisierten Linern abdecken (beziehungsweise sich davon nicht wieder abziehen).

US 4977206 A, US 4602056 A, EP 0664327 A1 und WO 97/07976 A1 beschreiben Schmelzklebstoffe aus einer Mischung von einem Klebharz und einem mit Maleinsäureanhydrid oder Acrylsäure gepfropften Polyolefin, wie einem Ethylen-Vinylacetat-Copolymeren oder einem Ethylen-Propylen oder Ethylen-1-Buten-Copolymeren. Es besteht schon lange der Wunsch nach einer Klebmasse, welche die positiven Eigenschaften der verschiedenen Klebmassen miteinander kombiniert: hohe Klebkraft, insbesondere selbst auf niederenergetischen Oberflächen und Alterungs- und UV-Stabilität wie Acrylatklebemassen sowie günstige Kosten und eine ausreichende Scherfestigkeit.
Aufgabe der Erfindung ist es, einen Haftklebstoff für zum Beispiel ein Klebeband zur Verfügung zu stellen, der die geschilderten Vorteile hat und gleichzeitig die Nachteile des Standes der Technik nicht aufweist.
Gelöst wird diese Aufgabe durch einen Haftklebstoff, wie er im Hauptanspruch niedergelegt ist. Vorteilhafte Weiterbildungen des Erfindungsgegenstands sowie Verwendungen des Klebestoffs finden sich in den Unteransprüchen.
Kernpunkt der Erfindung ist ein vernetzbares Polyolefin in einer Haftklebemasse aus mindestens drei verschiedenen Monomeren als Alternative zu Naturkautschuk oder Styrolblockcopolymeren wie SIS, welche es ermöglicht, preiswerte, alterungsstabile und durch Vernetzung scherfeste Klebebänder herzustellen.
Im Folgenden werden die Begriffe Haftklebstoff, Haftkleber und Haftklebemasse synonym verwendet. Haftklebstoff im Sinne dieser Erfindung sind solche, welche in der Lage sind, einem Klebeband eine Klebkraft auf Stahl von mindestens 0,5 N/cm, vorzugsweise mindestens 1 N/cm zu verleihen.

Demgemäß betrifft die Erfindung einen Haftklebstoff umfassend ein vernetzbares Polyolefin und mindestens ein Klebharz, worin das Polyolefin aufgebaut ist aus mindestens zwei Monomeren A und B und mindestens einem einer Vernetzung zugänglichen Comonomer C, wobei die Monomere A und B ausgewählt sind aus der Gruppe bestehend aus den α-Olefinen, Vinylacetat, n-Butylacrylat und Methylmethacrylat oder im Fall von EPDM ein Dien wie 5-Ethylidene-2-norbornen, Dicyclopentadien oder 5-Vinyl-2-norbornen. Die Monomere A und B des vernetzbaren Polyolefins werden vorzugsweise aus der Gruppe der α-Olefine, besonders bevorzugt aus der Gruppe von Ethylen, Propylen, Buten, Hexen und Octen ausgewählt.

Der Begriff Polyolefin in dieser Erfindung umfasst nicht nur Polyolefine in streng wissenschaftlichem Sinn, welche ausschließlich aus α-Olefinmonomeren aufgebaut sind, sondern auch die bei Kunststofftechnikern übliche Bezeichnung für Polyolefine, welche hauptsächlich aus α-Olefinmonomeren aufgebaut sind, aber Monomere wie zum Beispiel Vinylacetat, n-Butylacrylat, Methylmethacrylat, Acrylsäure, Glycidylmethacrylat oder Vinylsilan (zum Beispiel Vinyltriacetoxysilan, Vinyltriethoxysilan) einpolymerisiert enthalten können oder mit Comonomeren wie Silanen, Glycidylmethacrylat oder Maleinsäureanhydrid gepfropft sein können.

Vernetzbare Comonomere im Sinne dieser Erfindung sind solche, die nach Einbau (durch Copolymerisation oder Pfropfung) in ein Polymer eine chemische Vernetzung des Polymers ermöglichen. Diese umfassen zwar auch Diene, welche jedoch nur unter drastischen Bedingen (Zeit, Temperatur) mit Peroxiden oder Schwefel basierter Vulkanisation vernetzbar sind. Bevorzugt sind daher andere vernetzbare Comonomere, die unter üblichen Produktionsbedingungen der Haftklebeindustrie eine chemische Vernetzung ermöglichen. Diese sind besonders bevorzugt solche, die aus dem Stand der Technik bei Acrylathaftklebemassen bekannt sind, und umfassen besonders Glycidylmethacrylat, Maleinsäureanhydrid, Furmar-, Itacon-, Acryl- und Methacrylsäure.

Bevorzugte vernetzbare Polyolefine sind zum einen Terpolymere aus Ethylen, Vinylacetat, Ester der Acryl- oder Methacrylsäure und aus einem einer Vernetzung zugänglichen Comonomer wie Vinylsilan, Glycidylmethacrylat, Maleinsäureanhydrid, Acryl- oder Methacrylsäure und zum anderen mit dem Comonomer gepfropfte Copolymere oder Terpolymere ausgewählt aus der Gruppe der Copolymere von Ethylen und Propylen, der Copolymere von Propylen und Buten, der Copolymere von Ethylen und Octen und der Terpolymere aus Ethylen, Propylen und einem Dien vorzugsweise aus der Gruppe von 5-Ethylidene-2-norbornen, Dicyclopentadien und 5-Vinyl-2-norbornen.

Solche Polyolefine werden bisher nicht für Haftkleber eingesetzt, sondern in Coextrusionsfolien als Haftvermittlerschicht zwischen einer Polyolefinschicht und einer Polyamidschicht, als Schlagzähmodifizierungsmittel in Polyamid, zur Verbesserung der Festigkeit von glasfaserverstärkten Polyolefincompounds und als Siegelschicht auf Polyolefinfolien zum Auflaminieren auf Aluminiumverbundfolien.

Handelsübliche Terpolymere aus Ethylen, Acryl- oder Methacrylsäure und einem Ester der Acryl- oder Methacrylsäure weisen einen hohen Anteil an Säuren auf, welche auf polaren Untergründen wie Metall, PVC, Polycarbonat, Plexiglas oder Lacken eine hohe Haftung aufweisen allerdings nicht wieder abziehbar sind und theoretisch einen hohen Vernetzungsgrad erlauben. Aus diesen Eigenschaften ergeben sich bevorzugte Anwendungsgebiete für Haftkleber.

Handelsübliche mit Maleinsäureanhydrid gepfropfte Copolymere aus Ethylen und/oder Propylen oder EPDM-Kautschuk weisen einen geringen Säuregehalt auf und sind damit potenziell auch von polaren Substraten wieder abziehbar.

Polyolefine mit Einbau des Comonomers durch Pfropfung mittels Peroxiden in einem Reaktionsextruder werden wegen des Risikos von Gelanteilen weniger für Lösungsmittelmassen, sondern eher für Schmelzhaftklebemassen eingesetzt. Einer der Vorteile ist die uneingeschränkte Verfügbarkeit solcher Polyolefine am Markt beziehungsweise die leichte Zugänglichkeit bei Eigenfertigung. Zum Zweiten können Lösungsmittel vermieden werden. Polyolefine mit Einbau des Comonomers durch Copolymerisation sind für beide Arten von Klebemasse geeignet, wegen der guten Löslichkeit werden Anwendungen aus Lösung präferiert, welche sich mit Schmelzhaftklebern zum Beispiel bei geringen Masseaufträgen nicht oder nur schwer realisieren lassen.

Gemäß einer vorteilhaften Ausführungsform der Erfindung liegt der Gehalt an Comonomer C in dem Polyolefin im Bereich von 0,4 bis 5 Gew.-%.

Das erfindungsgemäße Polyolefin weist wegen der Scherfestigkeit vorzugsweise einen Schmelzindex von kleiner 10 besonders bevorzugt kleiner 1 insbesondere kleiner 0,5 und vor allem kleiner 0,1 g/10 min auf. Wenn an die Scherfestigkeit keine hohen Ansprüche gestellt werden aber an guter Verarbeitbarkeit sollte der Schmelzindex größer oder gleich 0,5 g/10 min sein. Der Schmelzindex wird nach ISO 1133 mit 2,16 kg geprüft und in g/10 min ausgedrückt. Die in dieser Offenbarung genannten Werte werden - wie dem Fachmann geläufig ist - bei verschiedenen Temperaturen in Abhängigkeit von dem Hauptmonomer des Polyolefins bestimmt, sie liegt bei überwiegend Ethylen- oder Butenhaltigen bei 190 °C und bei überwiegend Propylen-haltigen Polymeren bei 230 °C.

Die Mooney-Viskosität des Polyolefins liegt vorzugsweise größer 5, besonders bevorzugt größer 35 und insbesondere größer 60. Sie wird nach ASTM D 1646 unter den Bedingungen ML 1+4 bei 125 °C bestimmt.

Bei Maleinsäureanhydrid-haltigen Polymeren kann bei Feuchtigkeitszutritt Hydrolyse des Anhydrid-Rings eintreten, was den Schmelzindex und die Mooney-Viskosität beeinflussen kann.

Der Biegemodul des Polyolefins beträgt vorzugsweise weniger als 50 MPa, besonders bevorzugt weniger als 26 MPa, es ist vorzugsweise amorph und/oder weist einen Kristallitschmelzpunkt unter 105 °C. Die Schmelzwärme liegt vorzugsweise unter 18 J/g, weiter vorzugsweise unter 3 J/g.
Weicht man von diesen Eigenschaften zu stark ab, wird die Kristallinität zu hoch und bewirkt dadurch eine geringe Klebrigkeit (Tack).

Der Biegemodul (flexural modulus) ist nach ASTM D 790 (Sekantenmodul bei 2 % Dehnung) zu bestimmen.

Der Kristallitschmelzpunkt und die Schmelzwärme des Polyolefins werden mit DSC (Mettler DSC 822) bei einer Aufheizrate von 10 °C/min nach ISO 3146 ermittelt. Beim Auftreten mehrerer Schmelzpeaks wird als Kristallitschmelzpunkt der mit der höchsten Temperatur gewählt, und die Schmelzwärme aus der Summe aller Schmelzpeaks ermittelt. Wird zur Herstellung des erfindungsgemäßen Polyolefins durch Pfropfung ein Masterbatch von Monomer oder Peroxid in einem anderen Polyolefin zugefügt, so wird dessen Kristallitschmelzpunkt und die Schmelzwärme nicht berücksichtigt.

Der Gehalt an erfindungsgemäßem Polyolefin im Haftklebstoff liegt vorzugsweise zwischen 15 und 60 Gew.-%, besonders bevorzugt zwischen 20 und 40 Gew.-%.

Der Gehalt wird in der Praxis von der geforderten Balance zwischen Scherfestigkeit und Tack (Anfassvermögen, Klebrigkeit) bestimmt.
Der Anteil an Klebharz liegt gemäß einer weiteren vorteilhaften Ausführungsform bei 40 und 80 Gew.-%, besonders bevorzugt zwischen 60 und 80 Gew.-%, nämlich dann, wenn keine weiteren Zusatzstoffe oder sonstigen Additive enthalten sind.

Das erfindungsgemäße Polyolefin kann mit den aus Kautschukmassen bekannten Elastomeren wie Naturkautschuk oder Synthesekautschuken kombiniert werden. Vorzugsweise werden ungesättigte Elastomere wie Naturkautschuk, SBR, NBR oder ungesättigte Styrolblockcopolymere nicht oder nur in geringen Mengen verwendet, das heißt, der Anteil sollte höchstens bei 5 Gew.-% liegen. In der Hauptkette gesättigte Synthesekautschuke wie Polyisobutylen, Butylkautschuk, HNBR oder hydrierte Styrolblockcopolymere werden für den Fall einer gewünschten Modifikation bevorzugt. Besonders bevorzugt wird eine Mischung von erfindungsgemäßem Polyolefin mit einem Copolymer mit einer abgesehen von dem Comonomer ähnlichen Zusammensetzung, also zum Beispiel eine Mischung aus einem gepfropften Olefincopolymer und dem gleichen ungepfropften Olefincopolymer, weil sich dadurch die Rohstoffkosten verringern lassen.

Die Menge an Klebharz beträgt vorzugsweise 80 bis 300 phr, besonders bevorzugt 150 bis 200 phr. "phr" bezeichnet Gewichtsteile eines Additivs bezogen auf 100 Gewichtsteile Kautschuk oder Polymer (parts per hundred rubber beziehungsweise resin), das bedeutet hier bezogen auf 100 Gewichtsteile Polyolefins.

Über den Erweichungspunkt des Klebharzes (Bestimmung nach DIN ISO 4625) wird die Balance zwischen Scherfestigkeit und Tack eingestellt und liegt vorzugsweise zwischen 85 °C bis 125 °C.

Es stellte sich überraschenderweise heraus, dass Klebrigkeit (Tack) und Klebkraft der erfindungsgemäßen Klebemasse im Gegensatz zu konventionellen Kautschukmassen von der Polydispersität des Harzes sehr abhängig sind. Die Polydispersität ist das Verhältnis von Gewichtsmittel zu Zahlenmittel der Molmassenverteilung und kann durch Gelpermeationschromatographie ermittelt werden (PD = M_{w}/Mₙ). Als Klebharz werden daher solche mit einer Polydispersität von weniger als 2,1, vorzugsweise weniger als 1,8, besonders bevorzugt weniger als 1,6 eingesetzt. Der höchste Tack ist mit Harzen mit einer Polydispersität von 1,0 bis 1,4 zu erreichen.
Das gewichtsmittlere Molekulargewicht M_{w} und das zahlenmittlere Molekulargewicht Mₙ werden mittels Gelpermeationschromatographie (GPC) bestimmt. Als Eluent wird THF mit 0,1 Vol.-% Trifluoressigsäure eingesetzt. Die Messung erfolgt bei 25 °C. Als Vorsäule wird PSS-SDV, 5 µ, 10³ Å, ID 8,0 mm x 50 mm verwendet. Zur Auftrennung werden die Säulen PSS-SDV, 5 µ, 10³ sowie 10⁵und 10⁶ mit jeweils ID 8,0 mm x 300 mm eingesetzt. Die Probenkonzentration beträgt 4 g/l, die Durchflussmenge 1,0 ml pro Minute. Es wird gegen PMMA Standards gemessen. (µ = µm; 1 Å = 10⁻¹⁰ m).

Als Klebharz für den erfindungsgemäßen Haftkleber sind Harze auf Basis von Kolophonium oder Kolophoniumderivaten (zum Beispiel disproportioniertes, dimerisiertes oder verestertes Kolophonium), vorzugsweise partiell oder vollständig hydriert, gut geeignet. Sie weisen von allen Klebharzen den höchsten Tack (Klebrigkeit, Anfassvermögen) auf, vermutlich liegt das an der geringen Polydispersität von 1,0 bis 1,2. Terpenphenolharze sind ebenfalls geeignet, führen aber zu nur mäßigem Tack, aber dafür zu sehr guter Scherfestigkeit und Alterungsbeständigkeit.

Bevorzugt werden Kohlenwasserstoffharze, die vermutlich aufgrund Ihrer Polarität gut verträglich sind. Dies sind zum Beispiel aromatische Harze wie Cumaron-Inden-Harze oder Harze auf Basis Styrol oder α-Methylstyrol oder cycloaliphatischer Kohlenwasserstoffharze aus der Polymerisation von C₅-Monomeren wie Piperylen aus C₅- oder C₉-Fraktionen von Crackern oder Terpenen wie ß-Pinen oder δ-Limonen oder Kombinationen hiervon vorzugsweise partiell oder vollständig hydriert und Kohlenwasserstoffharze gewonnen durch Hydrierung von aromatenhaltigen Kohlenwasserstoffharzen oder Cyclopentadien-Polymeren.

Die Klebemasse enthält wenn sie besonders klebrig sein soll vorzugsweise einen flüssigen Weichmacher wie beispielsweise aliphatische (paraffinische oder verzweigte), cycloaliphatische (naphthenische) und aromatische Mineralöle, Ester der Phthal-, Trimellit-, Zitronen- oder Adipinsäure, flüssige Kautschuke (zum Beispiel niedermolekulare Nitril-, Butadien- oder Polyisoprenkautschuke), flüssige Polymerisate aus Isobuten und/oder Buten, Flüssig- und Weichharze mit einem Erweichungspunkt unter 40 °C auf Basis der Rohstoffe von Klebharzen, insbesondere der oben aufgeführten Klassen an Klebharz. Besonders bevorzugt werden flüssige Isobutenpolymerisate wie Isobutenhomopolymer oder Isobuten-Buten-Copolymer und Flüssig- und Weichharze mit einem Erweichungspunkt unter 40 °C. Mineralöle sind sehr preiswert und eignen sich sehr gut das Polyolefin klebrig einzustellen, können aber in zu verklebende Untergründe wie Papier einwandern, daher ist der Haftklebstoff in einer Ausführungsform im Wesentlichen frei von Mineralölen. Die Menge an Weichmacher liegt vorzugsweise zwischen 50 und 120 phr.

Zur Optimierung der Eigenschaften kann der zum Einsatz kommende Haftklebstoff aber mit weiteren Additiven wie primären und sekundären Antioxidantien, Füllstoffen, Flammschutzmitteln, Pigmenten, UV-Absorbern, Antiozonantien, Metalldesaktivatoren Lichtschutz-, Flamm-, Photoinitiatoren, Vernetzern oder Vernetzungspromotoren abgemischt sein. Geeignete Füllstoffe und Pigmente sind beispielsweise Ruß, Titandioxid, Calciumcarbonat, Zinkcarbonat, Glas- oder Polymerfasern, volle oder hohle Körper aus Glas oder Polymeren wie Mikroballons, Zinkoxid, Silicate oder Kieselsäure zugefügt. Weiterhin sind erfindungsgemäße Klebemassen möglich, ohne dass Antioxidanten und Lichtschutzmittel eingesetzt werden, weil die Stabilität im Vergleich zu konventionellen Kautschukklebemassen hoch ist, was für medizinische und Verpackungsanwendungen (Lebensmittel) von Vorteil ist.
Die Summe der Anteile der Additive übersteigt gemäß einer vorteilhaften Ausführungsform nicht 5 Gew.-%.

Der erfindungsgemäße Haftklebstoff kann in verschiedenen Verfahren auf Trägermaterialien aufgebracht werden. Je nach vorhandener Anlage, zu erreichendem Masseauftrag, Reaktionsgeschwindigkeit der Vernetzung und Löslichkeit des Polyolefins kann die Herstellung und Beschichtung der Haftklebemasse aus Lösung oder aus der Schmelze durch Beschichtung auf oder durch Coextrusion mit dem Träger erfolgen. Bei Verarbeitung der Haftklebemasse aus Lösung wird diese vorzugsweise in Toluol hergestellt oder gelöst und dann appliziert (beschichtet). Geeignete Herstellprozesse einer Schmelze umfassen sowohl Batchverfahren als auch kontinuierliche Verfahren. Besonders bevorzugt ist die kontinuierliche Fertigung der Haftklebemasse mit Hilfe eines Extruders und anschließender Beschichtung direkt auf das zu beschichtende Substrat bei entsprechend hoher Temperatur der Klebmasse. Als Beschichtungsverfahren für die erfindungsgemäßen Haftklebemassen werden Extrusionsbeschichtung mit Breitschlitzdüsen und Kalanderbeschichtung bevorzugt.

Der Erfindungsgegenstand kann je nach Anwendung in einem ein- oder beidseitig klebenden Klebeband verwendet werden. Bei mehrschichtigem Aufbau des Klebebands können mehrere Schichten durch Coextrusion, Kaschierung oder Beschichtung übereinander gebracht werden. Die Beschichtung kann direkt auf den Träger oder auf einen Liner oder auf einen Prozessliner erfolgen.

Die (Haft-)klebemasse kann
- ohne Träger und ohne weitere Schichten vorliegen,
- ohne Träger mit einer weiteren Haftklebemassenschicht vorliegen,
- einseitig auf einem Träger vorliegen, wobei auf der anderen Seite des Trägers eine andere Haftklebemasse, vorzugsweise auf Basis Polyacrylat, oder eine Siegelschicht vorhanden ist, oder
- beidseitig auf einem Träger vorliegen, wobei die beiden Haftklebemassen gleiche oder verschiedene Zusammensetzungen aufweisen können.

In der Verwendung als beidseitig klebendes Klebeband werden die Klebemassen ein- oder beidseitig mit einem Liner abgedeckt. Der Liner für das Produkt oder der Prozessliner ist zum Beispiel ein Trennpapier oder eine Trennfolie mit Trennbeschichtung vorzugsweise mit Silikonbeschichtung. Als Träger des Liners kommen zum Beispiel Folien aus Polyester oder Polypropylen oder kalandrierte Papiere mit oder ohne Beschichtung in Frage.

Der Masseauftrag (Beschichtungsstärke) einer Schicht liegt vorzugsweise zwischen 15 und 300 g/m², vorzugsweise zwischen 20 und 75 g/m².

Das Klebeband weist vorzugsweise eine Klebkraft auf Stahl von mindestens 0,5 N/cm, besonders bevorzugt mindestens 2 N/cm und insbesondere mindestens 9 N/cm auf. Das Klebeband weist vorzugsweise eine Klebkraft auf LDPE (PE-LD) von mindestens 2 N/cm, besonders bevorzugt mindestens 4 N/cm und insbesondere mindestens 8 N/cm auf. Die Klebkraft wird - so weit nicht anders angegeben - bei einem Abzugswinkel von 180° nach AFERA 4001 an einem 15 mm breiten Teststreifen bestimmt. Untergrund ist eine Stahlplatte beziehungsweise eine Platte aus LDPE nach AFERA 4001.

Das Klebeband weist vorzugsweise eine Scherfestigkeit von mindestens 200 min, besonders bevorzugt mindestens 1000 min, insbesondere mindestens 5000 min. auf. Die Prüfung erfolgt im Prinzip wie in der EP 1 582 575 B1, Absatz [0066] beschrieben (die hier durchgeführten Prüfungen erfolgen bei 23 °C auf Stahl mit einem Testgewicht von 1 kg). Die Scherfestigkeit wird dort als Scherstandszeit bezeichnet.

Das Klebeband weist in der Mikroscherwegprüfung vorzugsweise einen elastischen Anteil von mindestens 15 %, besonders bevorzugt mindestens 50 % auf. Die Prüfung erfolgt im Prinzip wie in EP 1 582 575 B1, Absatz [0067] beschrieben (die hier durchgeführten Prüfungen erfolgen bei 40 °C auf Stahl mit einem Testgewicht von 100 g). Der elastische Anteil wird mit der Formel (µS1-µS2)/µS1 berechnet und in % ausgedrückt.

Vorzugsweise wird der erfindungsgemäße Haftklebstoff durch eine Reaktion des Comonomers C chemisch vernetzt. Mit einem Vinylsilan wie Vinyltriethoxysilan gepfropfte Polyolefine haben den Vorteil, dass die Vernetzung durch Feuchtigkeit erst nach der Schmelzbeschichtung erfolgt, jedoch ist die Lagerfähigkeit wegen Selbstvernetzung begrenzt und bei dicken Schichten der Zutritt von Feuchtigkeit nur begrenzt möglich. Mit Hydroxyethylacrylat, Hydroxyethylmethacrylat, ungesättigten Säuren oder deren Derivaten gepfropfte Polyolefine haben den Vorteil, dass sie unbegrenzt lagerfähig sind und dass sie bei Verarbeitung aus Lösung mit für Naturkautschuk- und Acrylatklebemassen üblichen Vernetzern wie Isocyanaten, Epoxiden, Titanverbindungen, Aluminiumverbindungen, Oxazolinen, Aziridinen oder Aminen vernetzbar sind. Mit Säuren oder deren Derivaten gepfropfte Polyolefine lassen sich auch aus der Schmelze beschichten und parallel vernetzen. Dies schränkt zwar die Auswahl geeigneter Vernetzer ein, Amine und Epoxide lassen sich bei richtiger Auswahl an Vernetzer und Verfahrenbedingungen so der Schmelze zumischen, dass die Haftklebemasse vernetzt wird, aber trotzdem aus der Schmelze beschichtbar ist. Bei Verarbeitung aus der Schmelze ist eine ionogene Vernetzung besonders vorteilhaft, denn die Vernetzung ist thermisch reversibel und stört nicht den Beschichtungsvorgang aus der Schmelze. Das führt dazu, dass die Vernetzung bis etwa über 100 °C für die Endanwendung wirksam ist, aber bei Verarbeitung oberhalb von ca. 170 °C unter Einwirkung von Scherung und Temperatur eine thermoplastische Verarbeitung erlaubt. Hierfür sind Salze der Säuren mit ein- und zweiwertigen Metallionen geeignet, insbesondere von Zink und Magnesium. Die Salze können durch Copolymerisation oder Pfropfung von Monomeren wie Zinkacrylat erzeugt werden oder einfacher durch Umsetzung eines Säure- oder Säureanhydrid-haltigen Polymers mit einer Metallverbindung wie Zinkoxid oder Magnesiumhydroxid. Die Pfropfung eines olefinischen Polymers mit dem Comonomer kann in der Schmelze in einem Extruder oder im Festphasenverfahren (beispielsweise von der Firma Kometra) erfolgen. Da dies in der Regel in Gegenwart von Peroxiden erfolgt, kann das olefinische Polymer partiell vernetzt sein, was die Verwendung des erfindungsgemäßen Polyolefins in Lösung unmöglich macht und in der Schmelze zumindest erschwert. Daher ist die Auswahl der Verfahrensbedingungen und des olefinischen Polymers von Bedeutung. Gesättigte olefinische Polymere, insbesondere mit niedrigem Ethylengehalt, sind diesbezüglich besser geeignet als EPDM-Kautschuke mit hohem Anteil an Dien-Monomeren. Als besonders geeignet hat sich das Verfahren erwiesen, ein olefinisches Polymer in vorzugsweise 10 bis 20 %iger Lösung zum Beispiel in Toluol oder n-Hexan vorzugsweise am Siedepunkt zu pfropfen, wobei keine Vernetzung stattfindet. Die Lösung braucht dann nur noch mit dem Klebharz und gegebenenfalls weiteren Additiven, insbesondere Vernetzern, versetzt zu werden, um eine gebrauchsfertige Haftklebemasse zu erhalten.

Als Trägermaterial können alle bekannten Träger eingesetzt werden, zum Beispiel Gelege, Gewebe, Gewirke, Vliese, Folien, Papiere, Tissues, Schäume und geschäumte Folien. Geeignete Folien sind aus Polypropylen, vorzugsweise orientiertem, Polyester, Hart- und/oder Weich-PVC. Bevorzugt sind Polyolefin-, Polyurethan-, EPDM und Chloroprenschäume. Unter Polyolefin wird hier Polyethylen und Polypropylen verstanden, wobei Polyethylen wegen der Weichheit bevorzugt wird. Der Begriff Polyethylen schließt LDPE, aber auch Ethylencopolymere wie LLDPE und EVA ein. Insbesondere sind vernetzte Polyethylenschäume oder viskoelastische Träger geeignet. Letztere sind vorzugsweise aus Polyacrylat, besonders bevorzugt gefüllt mit hohlen Körpern aus Glas oder Polymeren.

Die Träger können vor dem Zusammenbringen mit der Klebemasse durch Primerung oder physikalische Vorbehandlung wie Corona vorbereitet werden. Vernetzte Polyethylenschäume werden für doppelseitig klebende Klebebänder derart behandelt, da eine Haftung von Acrylathaftklebemassen darauf sehr schlecht ist und selbst mit einer Behandlung nicht sehr zufrieden stellend. Es ist daher völlig überraschend, dass die erfindungsgemäßen Massen selbst ohne Behandlung der Oberfläche hervorragend auf solchen Schäumen haften, das heißt, beim gewaltsamen Versuch sie abzulösen, wird der Schaum zerstört.

Das Klebeband kann, insbesondere wenn der Träger auf der Rückseite aus einem Polyolefin besteht, mit einer Trennbeschichtung versehen sein wie zum Beispiel Polyvinylstearylcarbamat oder ein Silikon.

Der Ausdruck "Klebeband" im Sinne dieser Erfindung umfasst alle flächigen Gebilde wie in zwei Dimensionen ausgedehnte Folien oder Folienabschnitte, Bänder mit ausgedehnter Länge und begrenzter Breite, Bandabschnitte, Stanzlinge, Etiketten und dergleichen. Vorzugsweise liegt das Klebeband als durchgehende Bahn in Form einer Rolle und nicht als Stanzling oder Etikett vor. Das Klebeband kann in Form einer Rolle, also in Form einer archimedischen Spirale auf sich selbst aufgerollt, hergestellt werden.

Der Haftklebstoff ist besonders für niederenergetische Oberflächen wie unpolare Lacke, Druckklischees, Polyethylen, Polypropylen oder EPDM geeignet, also zum Beispiel zum Schließen oder Gurten von Polyolefinbeuteln oder zum Fixieren von Teilen aus olefinischen Kunststoffen oder Elastomeren insbesondere von Kunststoffteilen an Kraftfahrzeugen. Der Erfindungsgegenstand ist daher ideal für Etiketten von Kosmetikverpackungen (zum Beispiel für Körpermilch- oder Shampooflaschen), da er hochtransparent, gut auf Kunststoffflaschen haftet, wasserfest und alterungsbeständig ist. Bei Sicherheitsetiketten wie magnetischen Alarmetiketten oder Datenträgern wie Holospot® (tesa Holospot® ist ein selbstklebendes Polymer-Etikett, in dem sich ein nur wenige Quadratmillimeter großes Informationsfeld befindet; es haftet fest am Produkt und enthält verschiedene offene und verdeckte Sicherheitsmerkmale, die vorab mit einem hoch auflösenden Laser in das Informationsfeld eingeschrieben werden) löst der Erfindungsgegenstand das Problem der schlechten Haftung konventioneller Klebemassen auf unpolaren Untergründen. Der erfindungsgemäße Haftklebstoffs in einem Klebeband ist weiterhin zum Verkleben auf Haut und auf rauen Untergründen im Baubereich, als Verpackungsklebeband und für Wickelanwendungen geeignet. Beispiele für Anwendungen auf Haut sind Rollen- und Einzelpflaster, Stanzlinge zum Verkleben von Kolostomiebeuteln und Elektroden, Wirkstoffpflaster (transdermale Pflaster) und Bandagen. Wegen der Alterungsbeständigkeit bietet der Haftklebstoff die Möglichkeit, hautreizende oder anders chemisch wirkende Substanzen zu vermeiden. Daher ist der erfindungsgemäße Haftklebstoffs auch für den Aufbau von Hygieneprodukten wie Windelverschlüsse, Babywindeln oder Damenbinden geeignet, darüber hinaus haften sie insbesondere auf den dabei verwendeten Polyolefinfolien- und Vliesen und habe geringere Kosten und höhere Wärmebeständigkeit als konventionelle Massen aus hydrierten Styrolblockcopolymeren. Beispiele für Wickelanwendungen sind Elektroisolation und die Herstellung von Automobilkabelbäumen. Die erfindungsgemäßen Klebemassen sind im Gegensatz zu Natur- oder Synthesekautschukklebemassen auch bei hohen Temperaturen mit PP-, PE- und PVC-Drahtisolierungen verträglich. In Bauanwendungen als Putzband, für die Verklebung von Dachisolierfolien (Sperrfolien gegen Wasserdampf oder flüssiges Wasser) und als Bitumenklebeband für Dichtungsanwendungen und sonstige Außenanwendungen ist ein gutes Klebverhalten in der Kälte festzustellen und eine relativ gute UV-Beständigkeit. Weitere Anwendungen sind Ansatzklebebänder zum Endloskleben von bedruckten oder unbedruckten Folienbahnen und als Barriereklebeband gegen Diffusion von Feuchtigkeit und Sauerstoff in Photovoltaikmodulen oder elektronischen Bauteilen. Weiterhin ist die Erfindung für viskoelastische Klebstoffschichten geeignet, das sind Schichten, die gleichzeitig eine Haftklebstofffunktion und eine Trägerfunktion ausüben und bisher aus teuren Polyacrylaten in einer Schichtdicke von ca. 0,5 bis 3 mm gefertigt und teilweise zusätzlich mit Außenschichten aus tackigeren (klebrigeren) Polyacrylaten versehen werden.

Im Folgenden wird die Erfindung durch einige Beispiele näher erläutert, ohne die Erfindung damit einschränken zu wollen.

### Rohstoffe der Beispiele

- Lucalen A 2910 M:: Terpolymer aus 89 Gew.-% Ethylen, 7 % n-Butylacrylat und 4 % Acrylsäure, Schmelzpunkt 96 °C, Schmelzwärme 73 J/g Biegemodul ca. 84 MPa, Dichte 0,927 g/m³, Schmelzindex 7 g/10 min
- Lotryl 7 BA 01:: Copolymer aus Ethylen und 7 % n-Butylacrylat, Schmelzindex 1,3 g/10 min, Dichte 0,930 g/cm³, Biegemodul 85 MPa, Schmelzpunkt 107 °C
- Engage 7447:: Copolymer aus Ethylen mit Buten, Schmelzpunkt 35 °C, Biegemodul 8 MPa, Dichte 0,865 g/m³, Schmelzindex 5 g/10 min vor der Pfropfung und nach der Pfropfung 0,33 g/10 min
- Tafmer A 0550 S:: Copolymer aus Ethylen und Buten, Schmelzindex 0,5 g/10min vor der Pfropfung und nach der Pfropfung 0,03 g/10 min, Dichte 0,861 g/cm³, Biegemodul 7 MPa, Kristallitschmelzpunkt 45 °C
- Infuse 9817:: Copolymer aus Ethylen mit Octen, Schmelzpunkt 120 °C, Biegemodul 23 MPa, Dichte 0,877 g/m³, Schmelzindex 15 g/10 min vor der Pfropfung und nach der Pfropfung 4 g/10 min
- Vistamaxx 3000:: Copolymer aus Propylen und Ethylen, Schmelzindex vor der Pfropfung 7 g/10min bei 230 °C und 4,7 bei 190 °C, Dichte 0,871 g/cm³, Biegemodul 40 MPa, Kristallitschmelzpunkt 56 °C, Schmelzwärme 29,8 J/g
- Elvaloy AC 3517 Si:: Terpolymer aus Ethylen mit 17 % Butylacrylat und ca. 1 % Vinylsilan, Schmelzindex 5,3 g/10 min, Dichte 0,924 g/cm³, Biegemodul 40 MPa, Kristallitschmelzpunkt 97 °C, Schmelzwärme 60,6 J/g
- Elvaloy 3717:: Copolymer aus Ethylen mit 17 % Butylacrylat, Schmelzindex 7 g/10 min, Kristallitschmelzpunkt 96 °C
- Keltan DE 5005:: Ethylen-Propylen-Kautschuk basierend auf Keltan 3200 gepfropft mit 2 % Maleinsäureanhydrid, Ethylengehalt 49 %, Mooney nach Pfropfung 65.
- Keltan 3200 A:: Ethylen-Propylen-Kautschuk, Ethylengehalt 49 %, Mooney 20
- Buna EP XT 2708 VP:: Ethylen-Propylen-Kautschuk, 68 % Ethylen, ENB 0 %, 0,8 % Maleinsäureanhydrid aufgepfropft Mooney 28, Schmelzindex 0,10 g/10 min
- Buna EP G 2170 VP:: EPDM, Ethylengehalt 72 %, Mooney 25, ENB 1,2 %, Dichte 0,86 g/cm³, Schmelzindex 0,0 g/10 min bei 190 ° und 0,1 g/10 min bei 230 °C
- Ondina 933:: Weißöl (paraffinisch-naphthenisches Mineralöl)
- Indopol H-100:: Polyisobuten-Polybuten-Copolymer mit einer kinematischen Viskosität von 210 cSt bei 100 °C nach ASTM D 445
- Wingtack 10:: flüssiges C₅-Kohlenwasserstoffharz
- Wingtack 95:: nicht hydriertes C₅-Kohlenwasserstoffharz mit einem Schmelzpunkt von 95 °C
- Escorez 1310:: nicht hydriertes C₅-Kohlenwasserstoffharz mit einem Schmelzpunkt von 94 °C und einer Polydispersität von 1,5
- Epicure 925:: Triethylenetetramin dient als Vernetzer oder als Vernetzungsbeschleuniger für Epoxidvernetzung
- Polypox H 205:: α,ω-Diamino-polypropylenoxid
- Polypox R-16:: Pentaerythrittetraglycidether
- Desmodur VP LS 2371:: Isophorondiisocyanat-Prepolymer
- Irganox 1726:: phenolisches Antioxidans mit schwefelbasierter Funktion eines sekundären Antioxidans
- Irganox 1076:: phenolisches Antioxidans
- Tinuvin 622:: HALS-Lichtstabilisator
- Q-Cel 5025:: Glashohlkugeln
- Zinkoxid aktiv:: feinteiliges Zinkoxid für Kautschukvernetzung von Bayer

### Beispiel 1

Tafmer A 0550 S wird auf einem Extruder mit 1 Gew.-% Maleinsäureanhydrid gepfropft. 25,5 Gewichtsteile des Polymers, 54 Gewichtsteile Escorez 1310, 20 Gewichtsteile Ondina 933 und 0,5 Gewichtsteile Irganox 1726 werden in der Schmelze gemischt mit 300 g/m² Masseauftrag auf eine mit Trichloressigsäure geätzte Polyesterfolie 25 µm beschichtet.

### Beispiel 2

Durchführung wie Beispiel 1, aber zusätzlich mit 1 Gewichtsteil Epicure 925 bezogen auf 100 Gewichtsteile Klebemasse (Polymer und Additive).

### Beispiel 3

Infuse 9817 wird auf einem Extruder mit 1 Gew.-% Maleinsäureanhydrid gepfropft. 25,5 Gewichtsteile des Polymers, 50 Gewichtsteile Escorez 1310 und 27 Gewichtsteile Wingtack 10 werden in der Schmelze gemischt mit 250 g/m² Masseauftrag auf eine mit Trichloressigsäure geätzte Polyesterfolie 25 µm beschichtet.

### Beispiel 4

Durchführung wie Beispiel 3, aber zusätzlich mit 1 Gewichtsteil Epicure 925 bezogen auf 100 Gewichtsteile Klebemasse.

### Beispiel 5

Durchführung wie Beispiel 3, aber zusätzlich mit 4,35 Gewichtsteilen Polypox H 205 bezogen auf 100 Gewichtsteile Klebemasse.

### Beispiel 6

Durchführung wie Beispiel 3, aber zusätzlich mit 1 Gewichtsteil Polypox R-16 und 0,2 Gewichtsteilen Epicure 925.

### Vergleichsbeispiel 1

Durchführung wie Beispiel 3, jedoch mit ungepfropftem Infuse 9817.

### Beispiel 7

100 Gewichtsteile Vistamaxx 3000 werden in 900 Gewichtsteilen Toluol unter Rückfluss gelöst. 0,5 Gewichtsteile Maleinsäureanhydrid und 0,025 Gewichtsteile Perkadox 16 (Peroxid von Akzo Nobel) werden unter Rühren zugefügt und die Lösung 2 Stunden unter Rückfluss gekocht. Anschließend wird aus dem Pfropfpolymerisat eine Klebemasse hergestellt. Zusammensetzung (ohne Lösungsmittelanteil): 28 Gewichtsteile Pfropfpolymerisat, 54 Gewichtsteile Wingtack 95 und 18 Gewichtsteile Ondina 933. Beschichtung mit 50 g/m² Masseauftrag auf eine mit Trichloressigsäure geätzte Polyesterfolie 25 µm und anschließende Trocknung.

### Beispiel 8

Die Herstellung erfolgt analog Beispiel 7, jedoch mit dem Zusatz von 1,65 Gewichtsteilen Aluminiumacetylacetonat bezogen auf 100 Gewichtsteile erfindungsgemäßen Polymers.

### Beispiel 9

Die Herstellung erfolgt analog Beispiel 7, jedoch mit dem Zusatz von 3,3 Gewichtsteilen Aluminiumacetylacetonat bezogen auf 100 Gewichtsteile erfindungsgemäßen Polymers.

### Vergleichsbeispiel 2

Die Herstellung erfolgt analog Beispiel 7, jedoch Vistamaxx 3000 ohne Pfropfung (kein Maleinsäureanhydrid und kein Perkadox 16).

### Beispiel 10

Die Herstellung erfolgt analog Beispiel 7, jedoch mit Hydroxyethylmethacrylat anstelle von Maleinsäureanhydrid. Der Klebemasse werden vor der Beschichtung 8,45 Gewichtsteile Desmodur VP LS 2371 bezogen auf 100 Gewichtsteile erfindungsgemäßen Polymers zugesetzt.

### Beispiel 11

Auf einem Planetwalzenextruder werden folgenden Komponenten gemischt:

| | |
|---|---|
| 100 phr | Lucalen A 2910 M |
| 100 phr | Escorez 1310 |
| 50 phr | Q-Cel 5025 |
| 10 phr | Zinkoxid aktiv |
| 2 phr | Irganox 1726 |
| 1 phr | Tinuvin 622. |

Die Mischung wird auf einem Walzenauftragswerk zu einer 1000 g/m² schweren Klebstoffschicht ausgeformt. Diese wird auf beiden Seiten mit Corona behandelt und mit je 100 g/m² einer Acrylatmasse kaschiert. Die Acrylatmasse wird wie folgt hergestellt:
Ein für radikalische Polymerisationen konventioneller Reaktor wird mit 45 kg 2-Ethylhexylacrylat, 45 kg n-Butylacrylat, 5 kg Methylacrylat, 5 kg Acrylsäure und 66 kg Aceton/Isopropanol (92,5:7,5) befüllt. Nach 45minütiger Durchleitung von Stickstoffgas unter Rühren wird der Reaktor auf 58 °C hochgeheizt und 50 g AIBN hinzugegeben.

Anschließend wird das äußere Heizbad auf 75 °C erwärmt und die Reaktion konstant bei dieser Außentemperatur durchgeführt. Nach 1 h werden erneut 50 g AIBN zugegeben und nach 4 h mit 20 kg Aceton/Isopropanol Gemisch verdünnt. Nach 5 sowie nach 7 h werden jeweils mit 150 g Bis-(4-tert-butylcyclohexyl)-peroxydicarbonat nachinitiiert. Nach 22 h Reaktionszeit wird die Polymerisation abgebrochen und auf Raumtemperatur abgekühlt. Das Polyacrylat hat einen Umsatz von 99,6 %, einen K-Wert von 59, einen Feststoffgehalt von 54 %, ein mittleres Molekulargewicht von M_{w} = 557.000 g/mol, Polydispersität PD (M_{w}/Mₙ) = 7,6. Die Acrylatpolymerlösung wird mit einem Extruder im Vakuum vom Lösungsmittel befreit und in einem zweiten Schritt im Verhältnis 70 Gewichtsteilen Acylatpolymer und 30 Gewichtsteilen Dertophene DT 1100 sowie einem Epoxyvernetzer und einem Aminbeschleuniger abgemischt. Diese Acrylatmasse wird anschließend auf eine beidseitig silikonisierte Polyesterfolie mit 100 g/m² aufgetragen und mit der oben beschriebenen Polyolefinklebstoffschicht kaschiert. Die Klebkraftmessungen werden unter einem Abzugswinkel von 90° bestimmt.

### Beispiel 12

28 Gewichtsteile Lucalen A 2910 M, 54 Gewichtsteile Escorez 1310 und 18 Gewichtsteile Indopol H-100 werden in der Schmelze gemischt mit 250 g/m² Masseauftrag auf eine mit Trichloressigsäure geätzte Polyesterfolie 25 µm beschichtet.

### Beispiel 13

Die Herstellung erfolgt analog Beispiel 12, jedoch mit Zusatz von 2 Gewichtsteilen Polypox R-16 und 2 Gewichtsteilen Polypox H-205 jeweils bezogen auf 100 Gewichtsteile Klebemasse (Polymer und Additive ohne Lösungsmittel).

### Vergleichsbeispiel 3

Die Herstellung erfolgt analog Beispiel 12, jedoch mit Lotryl 7 BA 01 statt Lucalen A 2910 M.

### Beispiel 14

Engage 7447 wird auf einem Extruder mit 1 Gew.-% Maleinsäureanhydrid gepfropft. 28 Gewichtsteile des Polymers, 54 Gewichtsteile Escorez 1310, 18 Gewichtsteile Ondina 933 und 0,5 Gewichtsteile Irganox 1076 werden in der Schmelze gemischt mit 300 g/m² Masseauftrag auf eine mit Trichloressigsäure geätzte Polyesterfolie 25 µm aus der Schmelze beschichtet.

### Beispiel 15

Die Klebemasse hat die Rezeptur von Beispiel 14 wird jedoch in Lösung (Toluol) hergestellt, auf eine mit Trichloressigsäure geätzte Polyesterfolie 25 µm beschichtet und getrocknet. Der Masseauftrag beläuft sich auf 50 g/m².

### Vergleichsbeispiel 4

Wie Beispiel 14 jedoch, mit ungepfropftem Engage 7447.

### Beispiel 16

Die Herstellung erfolgt analog Beispiel 15, jedoch mit Zusatz von 1,65 Gewichtsteilen Aluminiumacetylacetonat bezogen auf Polymer.

### Beispiel 17

25,5 Gewichtsteile Elvaloy AC 3517 Si, 54 Gewichtsteile Escorez 1310 und 20 Gewichtsteile Ondina 933 werden in der Schmelze gemischt mit 225 g/m² Masseauftrag auf eine mit Trichloressigsäure geätzte Polyesterfolie 25 µm beschichtet.

### Beispiel 18

Die Herstellung erfolgt analog Beispiel 17, jedoch wird das Muster vor der Messung zur Vernetzung 3 Tage bei 80 % relativer Feuchte und 40 °C gelagert.

### Vergleichsbeispiel 5

Die Herstellung erfolgt analog Beispiel 17, jedoch mit Elvaloy 3717.

### Beispiel 19

28 Gewichtsteile Keltan DE 5005, 54 Gewichtsteile Escorez 1310 und 18 Gewichtsteile Ondina 933 werden in Lösung (Toluol) hergestellt, auf eine mit Trichloressigsäure geätzte Polyesterfolie 25 µm beschichtet und getrocknet. Der Masseauftrag beläuft sich auf 50 g/m².

### Beispiel 20

Die Herstellung erfolgt analog Beispiel 19, jedoch mit Zusatz von 1,89 Gewichtsteilen Polypox H 205 bezogen auf Polymer.

### Vergleichsbeispiel 6

Die Herstellung erfolgt analog Beispiel 19, jedoch mit Keltan 3200 A.

### Beispiel 21

28 Gewichtsteile Buna EP XT 2708 VP, 54 Gewichtsteile Escorez 1310 und 18 Gewichtsteile Ondina 933 werden in Lösung (Toluol) hergestellt, mit 3,3 Gewichtsteilen Aluminiumacetylacetonat bezogen auf Polymer versetzt, dann auf eine mit Trichloressigsäure geätzte Polyesterfolie 25 µm beschichtet und getrocknet. Der Masseauftrag beläuft sich auf 50 g/m².

### Vergleichsbeispiel 7

Die Herstellung erfolgt analog Beispiel 21, jedoch mit Buna EP G 2170 VP.

### Ergebnisse

B = Beispiel, VB = Vergleichsbeispiel, CF = cohesion failure (Klebemasse spaltet), AF = adhesion failure (Klebemasse platzt ohne zu fließen vom Untergrund ab)

| Nr. von Beispiel bzw. Vergleichsbeispiel | Klebkraft Stahl [N/cm] | Klebkraft LDPE [N/cm] | Scherfestigkeit bei 23 °C [min.] | Mikroscherweg [µm] | Mikroscherweg elastischer Anteil [%] |
|---|---|---|---|---|---|
| B 1 | - | 5 | 230 | - | - |
| B 2 | - | 4,7 | 312 | - | - |
| B 3 | - | 12 | 46 | | |
| B 4 | - | 6 | 13 AF | - | - |
| B 5 | - | 6 | 1 AF | - | - |
| B 6 | - | 6 | 8 AF | - | - |
| VB 1 | > 20 CF | 13 | 1 | - | - |
| B 7 | 7,6 | 2,3 | 7343 | 40,5 | 0,35 |
| B 8 | 9,3 | 3,4 | 7094 | 19 | 76 |
| B 9 | 8,9 | 2,5 | > 10.000 | 14 | 57 |
| VB 2 | 8,7 | 4,2 | 51 | 1405 | 0,02 |
| B 10 | 4,8 | 3,7 | > 10.000 | 11 | 73 |
| B 11 | 30 | 13 | > 10.000 | - | - |
| B 12 | 11 | 3 | 90 | - | - |
| B13 | - | 2 | 20 | - | - |
| VB 3 | klebt nicht | klebt nicht | | | |
| B 14 | - | 11 | 3 Werte > 10.000, 1 Wert 95 AF | - | - |
| B 15 | > 20 CF | 7,4 | 1821 | 743 | 9,8 |
| B 16 | - | 1,3 | 4536 | 205 | 19 |
| VB 4 | > 20 CF | 3,8 | 45 | 1600 | 0,03 |
| B 17 | - | 15 | 105 | - | - |
| B 18 | | 10 | 3 Werte > 10.000, 1 Wert 22 AF | | |
| VB 5 | - | 12 | 75 | - | - |
| B 19 | 15 CF | 4,7 | 160 | 95 | 41 |
| B 20 | 6,6 | 2,5 | 3077 | 34 | 50 |
| VB 6 | - | 14 | 25 | - | - |
| B 21 | - | 2 | 3872 | 147 | 8,6 |
| VB 7 | - | 0,9 | 2503 | 680 | 0,9 |

Durch den Einbau eines polaren Monomers wird die Kohäsion (Widerstand gegen kalten Fluss) erkennbar an höherer Scherfestigkeit und niedrigerem Mikroscherweg verbessert. Beim Einbau von Säuren oder Anhydriden ohne Ausschluss von Feuchtigkeit kann dies durch die polare Wechselwirkung über Wasserstoffbrücken erklärt werden. Die Verbesserung wird insbesondere durch Vernetzung drastisch gesteigert. Vernetzung führt insbesondere zu einem erheblichen elastischen Anteil bei der Mikroscherwegmessung, was dem Fachmann sagt, dass der kalte Fluss im Lauf der Zeit (des Fließweges) durch Gegenkräfte aus dem deformierten Netzwerk unterbrochen beziehungsweise zumindest erheblich reduziert wird. Bei Zugabe einer zu hohen Vernetzermenge kann Adhäsionsbruch (AF) auftreten, die Scherfestigkeit beginnt stark zu streuen, weil die Proben nicht abscheren, sondern durch Zufall abplatzen (siehe zum Beispiel 4 bis 6). Eine Übervernetzung kann sich auch durch zurückgehende elastische Anteile des Mikroscherwegs bemerkbar machen, weil sich das Polymer dann schon etwas wie ein Duroplast verhält, diese Erscheinung ist auch bei Acrylathaftklebemasse wohlbekannt. Durch den Einbau eines polaren Monomers kann die Klebkraft auf polaren Gründen wie Stahl steigern, aber auf unpolaren Gründen wie LDPE reduzieren. Die Klebkräfte werden durch Vernetzung reduziert, wie es für Lösemittelmassen auf Basis Naturkautschuk und Acrylat bekannt ist.

## Patentansprüche

1. Verwendung eines Haftklebstoffs, umfassend ein vernetzbares Polyolefin und mindestens ein Klebharz, worin das Polyolefin aufgebaut ist aus mindestens zwei Monomeren A und B und mindestens einem einer Vernetzung zugänglichen Comonomer C, wobei die Monomere A und B ausgewählt sind aus der Gruppe bestehend aus α-Olefinen, Vinylacetat, n-Butylacrylat und Methylmethacrylat oder im Fall von EPDM ein Dien wie 5-Ethylidene-2-norbornen, Dicyclopentadien oder 5-Vinyl-2-norbornen, wobei der Gehalt an Comonomer C in dem Polyolefin im Bereich von 0,4 bis 5 Gew.-% liegt, wobei das Polyolefin einen Schmelzindex von kleiner 10, geprüft nach ISO 1133 mit 2,16 kg und in g/10 min ausgedrückt, und/oder eine Mooney-Viskosität von größer 5, bestimmt nach ASTM D 1646 unter den Bedingungen ML 1+4 bei 125 °C, aufweist, und wobei das Polyolefin erhältlich ist durch Polymerisation der mindestens zwei Monomere A und B und Pfropfung des Comonomers C auf dieses Polymerisat,
**dadurch gekennzeichnet, dass**
(i) der Haftklebstoff aus Lösung auf einem Träger appliziert und durch ein Isocyanat, ein Epoxid, eine Titanverbindung, eine Aluminiumverbindung, ein Oxazolin, ein Aziridin oder ein Amin vernetzt wird, oder
(ii) der Haftklebstoff aus der Schmelze auf einem Träger appliziert und durch ein Epoxid, ein Amin, eine Zinkverbindung oder eine Magnesiumverbindung vernetzt wird.

2. Verwendung eines Haftklebstoffs nach Anspruch 1,
**dadurch gekennzeichnet, dass**
die mindestens zwei Monomere A und B des vernetzbaren Polyolefins ausgewählt sind aus der Gruppe der α-Olefine, vorzugsweise aus der Gruppe von Ethylen, Propylen, Buten, Hexen und Octen.

3. Verwendung eines Haftklebstoffs nach zumindest einem der vorherigen Ansprüche,
**dadurch gekennzeichnet, dass**
das Polyolefin
ein mit dem Comonomer C gepfropftes Copolymer ist, ausgewählt aus der Gruppe der Copolymere von Ethylen und Propylen, der Copolymere von Propylen und Buten, der Copolymere Hexen oder Octen, der Copolymere von Propylen und Buten und der Terpolymere aus Ethylen, Propylen und einem Dien aus der Gruppe von 5-Ethylidene-2-norbornen, Dicyclopentadien und 5-Vinyl-2-norbornen

4. Verwendung eines Haftklebstoffs nach zumindest einem der vorherigen Ansprüche,
**dadurch gekennzeichnet, dass**
das Comonomer C entweder ein Vinylsilan oder Hydroxyethylmethacrylat ist oder aus der Gruppe der ungesättigten organischen Säuren, deren Anhydride oder Salze ausgewählt ist.

5. Verwendung eines Haftklebstoffs nach zumindest einem der vorherigen Ansprüche,
**dadurch gekennzeichnet, dass**
der Haftklebstoff einen Weichmacher enthält, vorzugsweise gewählt aus der Gruppe der Mineralöle, der flüssigen Klebharze, der flüssigen Polymerisate von Isobutenhomopolymer und/oder Isobuten-Buten-Copolymer und der Ester der Phthal-, Trimellit-, Zitronen- oder Adipinsäure, insbesondere deren Ester von verzweigten Octanolen und Nonanolen.

6. Verwendung eines Haftklebstoffs nach zumindest einem der vorherigen Ansprüche,
**dadurch gekennzeichnet, dass**
der Haftklebstoff aus Toluol auf dem Träger appliziert wird.

7. Verwendung eines Haftklebstoffs nach zumindest einem der vorherigen Ansprüche in einem ein- oder beidseitig klebenden Klebeband, wobei das Klebeband mindestens auf der einen Seite eine Klebkraft auf Stahl von mindestens 0,5 N/cm, vorzugsweise mindestens 2 N/cm, besonders bevorzugt mindesten 9 N/cm und/oder eine Klebkraft auf LDPE von mindestens 2 N/cm, vorzugsweise mindestens 4 N/cm, besonders bevorzugt mindesten 8 N/cm aufweist, jeweils bestimmt bei einem Abzugswinkel von 180° nach AFERA 4001 an einem 15 mm breiten Teststreifen, wobei der Untergrund eine Stahlplatte beziehungsweise eine Platte aus LDPE nach AFERA 4001 ist.

8. Verwendung eines Haftklebstoffs nach zumindest einem der vorherigen Ansprüche in einem ein- oder beidseitig klebenden Klebeband, wobei der Masseauftrag des Haftklebstoffs in einer Schicht zwischen 15 und 300 g/m², vorzugsweise zwischen 20 und 75 g/m² liegt.

9. Verwendung eines Haftklebstoffs nach zumindest einem der vorherigen Ansprüche in einem ein- oder beidseitig klebenden Klebeband, wobei die Scherfestigkeit mindestens 200 min, ermittelt wie in der Beschreibung angegeben, und/oder der elastische Anteil aus der Mikroscherwegprüfung mindestens 15 % beträgt, ermittelt wie in der Beschreibung angegeben.

10. Verwendung eines Haftklebstoffs nach zumindest einem der vorherigen Ansprüche in einem ein- oder beidseitig klebenden Klebeband mit einem Polyethylenschaumträger, dessen mit der Klebemasse in Kontakt stehende Oberflächen nicht (vor-)behandelt sind.

11. Verwendung eines Haftklebstoffs nach zumindest einem der vorherigen Ansprüche in einem ein- oder beidseitig klebenden Klebeband, wobei der Träger ein Vlies, ein Tissue, eine Folie oder ein Schaum vorzugsweise ein vernetzter Polyethylenschaum oder ein viskoelastischer Träger ist.

12. Verwendung eines Haftklebstoffs nach zumindest einem der vorherigen Ansprüche in einem ein- oder beidseitig klebenden Klebeband, das zum Verkleben auf niederenergetischen Oberflächen, Folien wie Dachisolierfolien, Haut oder rauen Untergründen im Baubereich, als Etikett, als Barriereklebeband oder für Wickelanwendungen wie Automobilkabelbaumherstellung.

## Claims

1. Use of a pressure-sensitive adhesive comprising a crosslinkable polyolefin and at least one tackifier resin, wherein the polyolefin is composed of at least two monomers A and B and of at least one comonomer C amenable to crosslinking, the monomers A and B being selected from the group consisting of α-olefins, vinyl acetate, n-butyl acrylate and methyl methacrylate or, in the case of EPDM, a diene such as 5-ethylidene-2-norbornene, dicyclopentadiene or 5-vinyl-2-norbornene, where the amount of comonomer C in the polyolefin is in the range from 0.4% to 5% by weight, where the polyolefin has a melt index of less than 10, is tested in accordance with ISO 1133 under 2.16 kg and expressed in g/10 min, and/or has a Mooney viscosity of greater than 5, determined in accordance with ASTM D 1646 under the conditions ML 1+4 at 125°C, and where the polyolefin is obtainable by polymerization of the at least two monomers A and B and grafting of the comonomer C onto this polymer, **characterized in that**
(i) the pressure-sensitive adhesive is applied from solution to a carrier and is crosslinked by an isocyanate, an epoxide, a titanium compound, an aluminium compound, an oxazoline, an aziridine or an amine, or
(ii) the pressure-sensitive adhesive is applied from the melt to a carrier and is crosslinked by an epoxide, an amine, a zinc compound or a magnesium compound.

2. Use of a pressure-sensitive adhesive according to Claim 1,
**characterized in that**
the at least two monomers A and B of the crosslinkable polyolefin are selected from the group of the α-olefins, preferably from the group of ethylene, propylene, butene, hexene and octene.

3. Use of a pressure-sensitive adhesive according to at least one of the preceding claims,
**characterized in that**
the polyolefin is a copolymer C grafted with the comonomer, selected from the group of the copolymers of ethylene and propylene, the copolymers of propylene and butene, the copolymers of hexene or octene, the copolymers of propylene and butene, and the terpolymers of ethylene, propylene and a diene from the group of 5-ethylidene-2-norbornene, dicyclopentadiene and 5-vinyl-2-norbornene.

4. Use of a pressure-sensitive adhesive according to at least one of the preceding claims,
**characterized in that**
the comonomer C is either a vinylsilane or hydroxyethyl methacrylate or is selected from the group of unsaturated organic acids, their anhydrides or salts.

5. Use of a pressure-sensitive adhesive according to at least one of the preceding claims,
**characterized in that**
the pressure-sensitive adhesive comprises a plasticizer, preferably selected from the group of mineral oils, of liquid tackifier resins, of liquid polymers of isobutene homopolymer and/or isobutene-butene copolymer, and of esters of phthalic, trimellitic, citric or adipic acid, more particularly their esters of branched octanols and nonanols.

6. Use of a pressure-sensitive adhesive according to at least one of the preceding claims,
**characterized in that**
the pressure-sensitive adhesive is applied from toluene to a carrier.

7. Use of a pressure-sensitive adhesive according to at least one of the preceding claims in a single-sided or double-sided adhesive tape, the adhesive tape having at least on one side a bond strength to LDPE of at least 0.5 N/cm, preferably at least 2 N/cm, more preferably at least 9 N/cm, and/or a bond strength to steel of at least 2 N/cm, preferably at least 4 N/cm, more preferably at least 8 N/cm, determined in each case at a peel angle of 180° in accordance with AFERA 4001 on a test strip 15 mm wide, the substrate being a steel plate or a plate of LDPE, respectively, in accordance with AFERA 4001.

8. Use of a pressure-sensitive adhesive according to at least one of the preceding claims in a single-sided or double-sided adhesive tape, the coatweight of the pressure-sensitive adhesive in one coat being between 15 and 300 g/m², preferably between 20 and 75 g/m².

9. Use of a pressure-sensitive adhesive according to at least one of the preceding claims in a single-sided or double-sided adhesive tape, the shear strength being at least 200 min, determined as specified in the description, and/or the elastic component from the microshear travel test being at least 15%, determined as specified in the description.

10. Use of a pressure-sensitive adhesive according to at least one of the preceding claims in a single-sided or double-sided adhesive tape having a polyethylene foam carrier whose surfaces in contact with the adhesive have not been (pre)treated.

11. Use of a pressure-sensitive adhesive according to at least one of the preceding claims in a single-sided or double-sided adhesive tape, the carrier being a nonwoven, a tissue, a film or a foam, preferably a crosslinked polyethylene foam, or a viscoelastic carrier.

12. Use of a pressure-sensitive adhesive according to at least one of the preceding claims in a single-sided or double-sided adhesive tape for adhesive bonding on low-energy surfaces, films such as roof insulation films, skin or rough substrates in the construction sector, as a label, as an adhesive barrier tape or for wrapping applications such as automotive cable loom production.

## Revendications

1. Utilisation d'un adhésif de contact, comprenant une polyoléfine réticulable et au moins une résine adhésive, la polyoléfine étant formée par au moins deux monomères A et B et au moins un comonomère C disponible pour une réticulation, les monomères A et B étant choisis dans le groupe constitué par les α-oléfines, l'acétate de vinyle, l'acrylate de n-butyle et le méthacrylate de méthyle ou, dans le cas de l'EPDM, un diène tel que le 5-éthylidène-2-norbornène, le dicyclopentadiène ou le 5-vinyl-2-norbornène, la teneur en comonomère C dans la polyoléfine se situant dans la plage allant de 0,4 à 5 % en poids, la polyoléfine présentant un indice de fusion inférieur à 10, déterminé selon ISO 1133 avec 2,16 kg et exprimé en g/10 minutes, et/ou une viscosité de Mooney supérieure à 5, déterminée selon ASTM D 1646, dans les conditions ML 1+4 à 125 °C, et la polyoléfine pouvant être obtenue par polymérisation desdits au moins deux monomères A et B et greffage du monomère C sur ce polymère, **caractérisée en ce que**
(i) l'adhésif de contact est appliqué à partir d'une solution sur un support, et réticulé par un isocyanate un époxyde, un composé de titane, un composé d'aluminium, une oxazoline, une aziridine ou une amine, ou
(ii) l'adhésif de contact est appliqué à partir de la masse fondue sur un support, et réticulé par un époxyde, une amine, un composé de zinc ou un composé de magnésium.

2. Utilisation d'un adhésif de contact selon la revendication 1, **caractérisée en ce que** lesdits au moins deux monomères A et B de la polyoléfine réticulable sont choisis dans le groupe constitué par les α-oléfines, de préférence du groupe constitué par l'éthylène, le propylène, le butène, l'hexène et l'octène.

3. Utilisation d'un adhésif de contact selon au moins l'une quelconque des revendications précédentes, **caractérisée en ce que** la polyoléfine est un copolymère greffé avec le comonomère C, choisi dans le groupe constitué par les copolymères d'éthylène et de propylène, les copolymères de propylène et de butène, les copolymères d'hexène ou d'octène, les copolymères de propylène et de butène et les terpolymères d'éthylène, de propylène et d'un diène du groupe constitué par le 5-éthylidène-2-norbornène, le dicyclopentadiène et le 5-vinyl-2-norbornène.

4. Utilisation d'un adhésif de contact selon au moins l'une quelconque des revendications précédentes, **caractérisée en ce que** le comonomère C est un vinylsilane ou un méthacrylate d'hydroxyéthyle, ou est choisi dans le groupe constitué par les acides organiques insaturés, leurs anhydrides ou leurs sels.

5. Utilisation d'un adhésif de contact selon au moins l'une quelconque des revendications précédentes, **caractérisée en ce que** l'adhésif de contact contient un plastifiant, de préférence choisi dans le groupe constitué par les huiles minérales, les résines adhésives liquides, les polymères liquides d'homopolymère d'isobutène et/ou de copolymère d'isobutène-butène et les esters de l'acide phtalique, trimellitique, citrique ou adipique, notamment leurs esters d'octanols et nonanols ramifiés.

6. Utilisation d'un adhésif de contact selon au moins l'une quelconque des revendications précédentes, **caractérisée en ce que** l'adhésif de contact est appliqué à partir de toluène sur le support.

7. Utilisation d'un adhésif de contact selon au moins l'une quelconque des revendications précédentes dans une bande adhésive simple ou double face, la bande adhésive présentant au moins sur un côté une force d'adhésion sur l'acier d'au moins 0,5 N/cm, de préférence d'au moins 2 N/cm, de manière particulièrement préférée d'au moins 9 N/cm, et/ou une force d'adhésion sur le LDPE d'au moins 2 N/cm, de préférence d'au moins 4 N/cm, de manière particulièrement préférée d'au moins 8 N/cm, à chaque fois déterminée à un angle de retrait de 180° selon AFERA 4001 sur une bande d'essai d'une largeur de 15 mm, le substrat étant une plaque en acier ou une plaque en LDPE selon AFERA 4001.

8. Utilisation d'un adhésif de contact selon au moins l'une quelconque des revendications précédentes dans une bande adhésive simple ou double face, la masse appliquée de l'adhésif de contact dans une couche étant comprise entre 15 et 300 g/m², de préférence entre 20 et 75 g/m².

9. Utilisation d'un adhésif de contact selon au moins l'une quelconque des revendications précédentes dans une bande adhésive simple ou double face, la résistance au cisaillement étant d'au moins 200 minutes, déterminée tel qu'indiqué dans la description, et/ou la fraction élastique de l'essai de microcisaillement étant d'au moins 15 %, déterminée tel qu'indiqué dans la description.

10. Utilisation d'un adhésif de contact selon au moins l'une quelconque des revendications précédentes dans une bande adhésive simple ou double face, avec un support en mousse de polyéthylène, dont les surfaces en contact avec la masse adhésive ne sont pas (pré-)traitées.

11. Utilisation d'un adhésif de contact selon au moins l'une quelconque des revendications précédentes dans une bande adhésive simple ou double face, le support étant un non-tissé, un tissu, un film ou une mousse, de préférence une mousse de polyéthylène réticulée ou un support viscoélastique.

12. Utilisation d'un adhésif de contact selon au moins l'une quelconque des revendications précédentes dans une bande adhésive simple ou double face, qui est destinée au collage sur des surfaces de faible énergie, des films tels que des films d'isolation de toiture, la peau ou des substrats bruts dans le domaine du bâtiment, en tant qu'étiquette, en tant que bande adhésive de barrière ou pour des applications d'enroulement, telles que la fabrication de faisceaux de câbles automobiles.
